# FASCICULE DE BREVET EUROPEEN

(11) **EP 2 668 494 B1**
(45) Date de publication et mention de la délivrance du brevet: **14.03.2018**
(21) Numéro de dépôt: 12703728.1
(22) Date de dépôt: 25.01.2012
(51) Int. Cl.: G01N 29/24, B23K 26/36, G01N 29/04, G01N 29/22, G01N 29/265

(54) **DISPOSITIF ET PROCÉDÈ POUR LE DECAPAGE ET LE CONTRÔLE SIMULTANÉS D'UNE PIÈCE PAR DES MOYENS ACOUSTIQUES**
VORRICHTUNG UND VERFAHREN ZUR SIMULTANEN AKUSTISCHEN REINIGUNG UND KONTROLLE EINES WERKSTÜCKS
APPARATUS AND METHOD FOR SIMULTANEOUS ACOUSTIC CLEANING AND CONTROL OF A WORKPIECE

(30) Priorité: 27.01.2011 FR 1150643
(43) Date de publication de la demande: 04.12.2013
(73) Titulaire: Airbus Group SAS, 31700 Blagnac (FR); Airbus Operations (S.A.S.), 31060 Toulouse (FR)
(72) Inventeur: VOILLAUME, Hubert, F-92130 Issy les Moulineaux (FR); CAMPAGNE, Benjamin, 44800 Saint Herblain (FR); BENTOUHAMI, Franck, F-85250 Chavannes en Paillers (FR)
(74) Mandataire: Ipside
(86) Numéro de dépôt international: PCT/EP2012/051163
(87) Numéro de publication internationale: WO 2012/101182

(56) Documents cités:
- EP-A1- 1 564 552
- WO-A1-2007/128138
- US-A- 4 137 778
- US-A1- 2004 074 883
- BLOUIN A ET AL: "Applications of laser tapping and laser ultrasonics to aerospace composite structures", INSIGHT: NON-DESTRUCTIVE TESTING AND CONDITION MONITORING MARCH 2010 BRITISH INSTITUTE OF NON-DESTRUCTIVE TESTING GBR, vol. 52, no. 3, mars 2010 (2010-03), pages 130-133, XP002650198, DOI: DOI:10.1784/INSI.2010.52.3.130

## Description

L'invention concerne un dispositif et un procédé pour le décapage et le contrôle simultané d'une pièce. Elle appartient au domaine des contrôles non destructifs et elle est particulièrement adaptée pour le traitement de surface et le contrôle de la santé matière de pièces de grandes dimensions constituées d'un matériau composite.

Le contrôle de la santé matière de pièces de grandes dimensions est une opération particulièrement longue et indispensable pour des pièces dont la tenue en service est critique, particulièrement dans le domaine aéronautique.

Parmi les méthodes de contrôle non destructif particulièrement adaptées à la détection de défauts susceptibles d'évoluer de manière catastrophique en service, le contrôle par ultrasons consiste à émettre une excitation en surface de sorte à générer une onde mécanique qui se propage dans le volume de la pièce. Une discontinuité présente dans ladite pièce, telle qu'une crique, ou un délaminage lorsqu'il s'agit d'une pièce constituée d'un matériau composite stratifié, modifie les conditions de propagation de cette onde en créant un écho et/ou une atténuation ou une diffraction remarquables de celle-ci. Ces phénomènes, qui peuvent être détectés depuis la surface de la pièce par la mesure des caractéristiques de l'onde transmise ou réfléchie, permettent ainsi la détection des défauts à l'origine de cette discontinuité.

Le contrôle d'une pièce par ultrasons nécessite le balayage de celle-ci par une source d'émission, apte à générer l'excitation mécanique de la surface, et par un capteur apte à mesurer la réponse de la pièce. C'est ce balayage qui consomme du temps.

L'utilisation d'un dispositif mécanique, tel qu'un dispositif piézoélectrique, pour l'excitation de la surface de la pièce et la mesure de sa réponse, nécessite l'utilisation d'un agent de couplage, tel que de l'eau, entre ledit dispositif et la surface excitée. Le plus souvent, pour un contrôle automatique de la pièce, celle-ci est alors immergée dans une piscine, ce qui conduit à des installations très importantes en volume lorsque la pièce est de grandes dimensions.

Le document US 4 137 778 décrit un dispositif et un procédé utilisant séquentiellement plusieurs sources laser de caractéristiques différentes pour le décapage puis le contrôle non destructif d'une pièce métallique. Ainsi, le procédé et le dispositif décrits dans ce document font appel à au moins deux impulsions laser distinctes, l'une étant utilisée pour le décapage et l'autre pour le contrôle non destructif. La nature métallique de la pièce contrôlée par le dispositif décrit dans ce document est essentielle. En effet, dans le cas d'un matériau métallique, la réflexion lumineuse de la surface lorsqu'elle est propre, réalise un effet de seuil évitant que des tirs laser successifs ne dégradent ladite surface. Dans le cas des d'une pièce en matériau composite telle que visée par l'invention, la surface de ces matériaux ne réfléchit pas ou peu le rayon lumineux et ne permet pas de profiter de cet effet de seuil.

L'invention vise à résoudre les inconvénients de l'art antérieur en proposant un procédé pour le contrôle à sec de la surface d'une pièce constituée d'un matériau composite à renfort fibreux, lequel procédé comprend les étapes consistant à :
a. exciter la surface de la pièce par une impulsion d'énergie thermoélastique au moyen d'un seul tir laser de sorte à produire simultanément une perturbation apte à décoller les particules adhérentes à ladite surface et une onde acoustique apte à se propager dans la pièce, l'énergie d'impulsion laser est de 6 joules pour une durée d'impulsion de 100ns ;
b. mesurer la réponse acoustique de la pièce à l'excitation produite à l'étape a) de sorte à détecter des discontinuités aptes à influencer la propagation de l'onde dans l'épaisseur de la pièce.

Ainsi, le procédé objet de l'invention combine les opérations de décapage, aussi qualifiées de dérochage, de la pièce et utilise avantageusement l'onde générée au cours de cette phase pour effectuer un contrôle par ultrasons de ladite pièce. Le procédé de contrôle intervient en temps masqué par rapport au procédé de dérochage/décapage, opération généralement préalable à la peinture de la pièce. De plus, le procédé permet d'utiliser une puissance d'excitation plus élevée et permet ainsi une meilleure détection des défauts notamment dans le cas de pièces épaisses. Un seul tir laser est utilisé ce qui évite la dégradation de la surface par des tirs successifs. Le procédé mis en oeuvre étant réalisé à sec, aucun dispositif d'immersion n'est nécessaire. Ainsi, ces diverses caractéristiques du procédé coopèrent pour permettre le contrôle automatique et en temps masqué d'une pièce de grandes dimensions.

L'invention peut être mise en oeuvre selon les modes avantageux, décrits ci-après, lesquels peuvent être considérés individuellement ou selon toute combinaison techniquement opérante.

Avantageusement, la mesure de la réponse acoustique est réalisée par interférométrie laser ce qui permet d'effectuer ladite mesure sans contact et sans couplant. Cette configuration est particulièrement avantageuse lorsque la mesure de la réponse est effectuée sur la même surface que l'excitation. La mesure sans contact et sans couplant étant beaucoup moins perturbée par les effets du décapage. Selon l'invention, l'énergie d'impulsion produite à l'étape a) est de 6 joules pour une durée d'impulsion de 100ns. Ces conditions d'excitations sont adaptées à la combinaison des fonctions de décapage et de contrôle non destructif.

Avantageusement, l'énergie d'impulsion est répartie sur une surface sensiblement rectangulaire de 5x40mm², cette surface est suffisamment large pour réaliser un décapage de la pièce par balayage dans des temps compatibles avec une production industrielle, mais reste compatible avec la détection des défauts recherchés dans un matériau composite à renfort fibreux.

L'invention sera maintenant plus précisément décrite dans le cadre de ses modes de réalisation préférés, nullement limitatifs, et des figures 1 à 4, dans lesquelles :
- la figure 1, relative à l'art antérieur, représente une vue de face et en coupe du principe de contrôle d'une pièce par la propagation d'ondes ultrasonores générées par une excitation thermoélastique de la surface d'une pièce au moyen d'un laser ;
- la figure 2 montre, selon la même vue que la figure 1, le principe d'une opération de décapage/dérochage par une excitation thermoélastique de la surface d'une pièce au moyen d'un laser combiné à un contrôle non destructif de la dite pièce par propagation d'une onde ultrasonore ;
- la figure 3 est une vue en perspective d'un exemple de réalisation du dispositif objet de l'invention pour le décapage/dérochage et le contrôle non destructif simultanés d'une pièce de grandes dimensions ;
- et la figure 4 est un logigramme d'un mode de réalisation du procédé objet de l'invention.

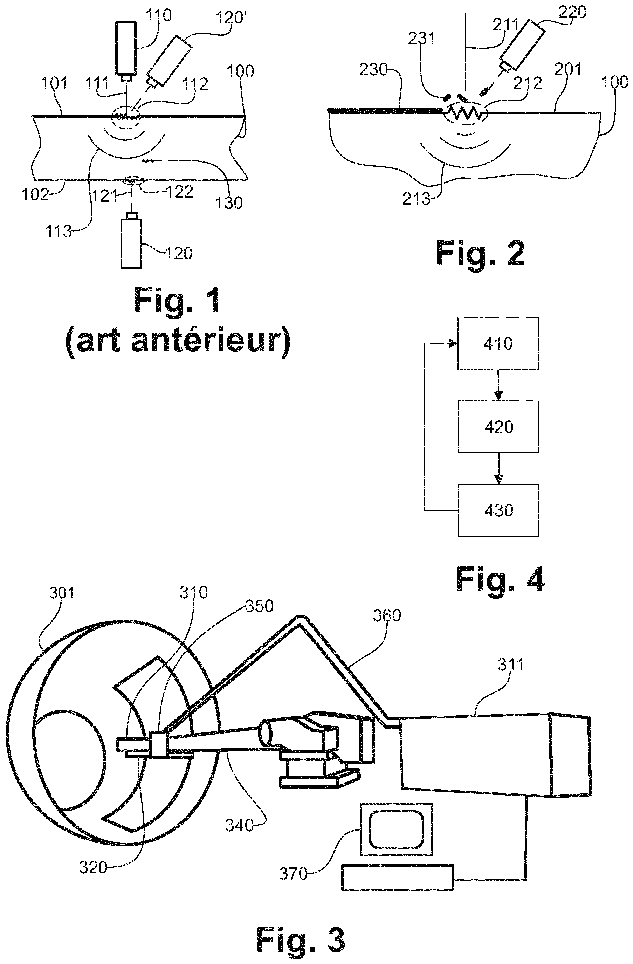

Figure 1, selon un exemple de réalisation, connu de l'art antérieur, le contrôle ultrasonore d'une pièce par laser consiste à produire une excitation localisée (112) à la surface (101) d'une pièce (100) par effet thermoélastique exposant une petite surface de la pièce à l'énergie délivrée sous forme impulsionnelle par un rayon laser (111) produit par une source (110) adaptée. Cette perturbation thermoélastique de la surface (101) produit une onde mécanique (113) qui se propage de manière élastique dans la pièce, à la vitesse du son dans le milieu constituant ladite pièce. Elle produit une déformation (122) de la surface opposée (102) de la pièce lorsqu'elle atteint ladite surface (102) sur laquelle l'onde (113) se réfléchit pour se propager en sens inverse. Cette déformation de la surface (102) peut être mesurée par un autre dispositif laser (120), pointant un rayon laser (121) de mesure vers ladite surface. Le principe de mesure est connu de l'art antérieur et n'est pas plus décrit, il s'agit d'une mesure en interférométrie, qui détecte la vitesse de déformation de la surface (102) par effet Doppler. Selon un exemple d'application simple, la mesure du temps séparant la génération de l'impulsion engendrant la première perturbation thermoélastique (112) et sa détection par la déformation (112) de la surface opposée, permet, connaissant la vitesse de propagation des ondes élastiques dans cette pièce, d'en mesurer l'épaisseur. Ce principe peut être avantageusement utilisé pour effectuer un contrôle non destructif de la pièce (100) dans son épaisseur. Ainsi, en plaçant le laser de détection (120') non plus sur la surface (102) libre opposée à la surface (101) recevant la perturbation thermoélastique impulsionnelle initiale (112) mais du même côté que celle-ci, alors, en présence d'un défaut (130) à l'intérieur de la pièce (100), une partie de l'onde élastique (113) va se réfléchir sur ce défaut (130), onde réfléchie qui, en se propageant, atteint de nouveau la surface (101) d'émission où elle peut être détectée par le dispositif de mesure (120'), de même que ce dispositif de mesure (120') détecte l'écho de fond, correspond à la réflexion de l'onde élastique (113) sur la surface opposée (102) de la pièce (100). L'onde réfléchie sur le défaut (130) rejoint la surface d'émission (101) avant l'écho de fond, de sorte que la mesure d'une perturbation de la surface (101) avant le retour de l'écho de fond atteste de la présence d'une discontinuité, et la mesure du temps séparant la mesure de cette déformation de surface de l'instant de l'impulsion initiale (112) permet de déterminer la profondeur du défaut (130) par rapport à la surface d'émission (101).

Le dérochage est une opération consistant à décaper la surface d'une pièce de sorte à en éliminer les couches de surface, lesquelles peuvent être des couches oxydées, des couches faiblement cohésives ou des souillures. Cette opération est indispensable avant toute opération de protection ou de revêtement de la surface pour assurer la cohésion dudit revêtement de la surface. Selon l'art antérieur ces opérations de dérochages sont réalisées par voie chimique ou par voie mécanique.

Le dérochage mécanique consiste à projeter sur la surface un moyen qui par son énergie cinétique va produire l'ablation d'une couche plus ou moins importante de la surface. Ledit moyen projeté peut se présenter sous formes de particules solides plus ou moins dures et/ou abrasives telles que du sable, des billes de verre ou de matière plastiques, de la glace ou de la matière ligneuse broyée. Un jet d'eau chargé ou non en abrasif peut également être utilisé à cette fin.

Figure 2, selon un exemple de réalisation de l'invention, l'opération de décapage/dérochage consiste à utiliser une source d'excitation mécanique ultrasonore localisée pour produire le dérochage. Selon cet exemple, non limitatif, la source d'excitation ultrasonore est un rayon laser (211) produisant, par effet thermoélastique, une perturbation (212) localisée de la surface (201) de la pièce. D'autres sources d'excitation ultrasonore localisées peuvent être utilisées.

L'utilisation des ultrasons pour le décapage/dérochage est connue de l'art antérieur. Selon l'art antérieur, cette technique est réservée aux pièces de dimensions modestes, car elle consiste à placer lesdites pièces dans un bac contenant un fluide et à soumettre ledit bac à une excitation ultrasonore énergique.

Dans l'exemple de réalisation du dispositif objet de l'invention représenté figure 2, l'excitation ultrasonore est localisée, ce qui permet notamment de réaliser celle-ci par un laser (211). La perturbation thermoélastique localisée (212) résultant de cette excitation de la surface (201) de la pièce (100), décolle une couche de surface (230) plus ou moins profonde, par effet mécanique, c'est-à-dire par la différence de déformation entre la zone sollicitée et le reste de la pièce (100), et/ou par effet thermique si la température de la surface exposée au laser (212) dépasse la température de vaporisation de ladite couche. La couche de surface ainsi affectée est pulvérisée sous forme de débris (231). Pour dérocher toute la surface (201) de la pièce, la source d'excitation (211) doit être déplacée afin de balayer la surface, ce qui est défavorable en conditions industrielles pour la productivité.

Le dispositif objet de l'invention résout cet inconvénient, en combinant cette opération de dérochage/décapage avec une opération de contrôle non destructif de la pièce (100). Ainsi, l'excitation localisée (212) de la surface de la pièce par une source ultrasonore en vue de son décapage/dérochage est mise à profit en y adjoignant un dispositif de mesure (220) pour mesurer les effets de réflexion de l'onde ultrasonore (213), générée lors de chaque impulsion, et ainsi contrôler la pièce par la possibilité de détection de la présence de défauts dans l'épaisseur de celle-ci lors de chaque tir. Ainsi, l'opération de décapage/dérochage est réalisée en temps masqué au cours du contrôle non destructif de la pièce et n'a pas de conséquence sur le temps de cycle global de fabrication de la pièce.

Le dispositif objet de l'invention, est également particulièrement avantageux pour le contrôle de pièces épaisses, particulièrement dans le cas où celles-ci sont constituées d'un matériau composite à renfort fibreux. Selon l'art antérieur, l'utilisation des ultrasons générés par laser dans ce cas était limitée par le risque de dégradation de la surface de la pièce ainsi contrôlée, car nécessitant une énergie d'excitation élevée. Le dispositif objet de l'invention, par le choix judicieux des paramètres d'excitation permet de disposer d'une puissance d'excitation suffisante pour le contrôle de pièces épaisses, laquelle excitation produit une « dégradation » contrôlée et désirée de la surface sous la forme d'un décapage/dérochage. Le terme « dégradation » est ici mis entre guillemets pour différencier l'effet technique de l'invention, c'est-à-dire le dérochage, qui est produit volontairement dans un but de conférer une valeur ajoutée à la pièce (100) objet du contrôle, de l'effet involontaire et indésirable produit accidentellement selon l'art antérieur, lors d'un contrôle non destructif utilisant une forte puissance de sollicitation, effet qui se traduit par un coût de non-qualité affectant la pièce qui le subit.

Selon un exemple d'application particulièrement avantageux, plus particulièrement, mais non limitativement, adapté au contrôle de pièces constituées d'un matériau composite comportant une résine polymère renforcée par des fibres de carbone, le dispositif objet de l'invention utilise un laser de type TEA CO2, avec une longueur d'onde de 10,6 µm. (10,6.10⁻⁶ m) pour l'excitation impulsionnelle de la surface (201).

Selon cet exemple de réalisation, le dispositif utilise avantageusement une énergie d'impulsion de 6 joules, pour une durée d'impulsion de l'ordre de 100 ns (100.10⁻⁹ s), cette énergie étant répartie sur une surface sensiblement rectangulaire de 5x40 mm², soit une densité d'énergie de l'ordre de 2,5 J. cm⁻². Cette densité d'énergie est environ cinq fois plus importante que celle qui est communément utilisée pour l'excitation impulsionnelle d'une surface en vue d'un contrôle non destructif.

Figure 3, selon un exemple de réalisation, le dispositif objet de l'invention est adapté au contrôle non destructif et au dérochage simultané de pièces de grande dimension notamment de pièces constituant la structure d'un aéronef (301). Selon cet exemple de réalisation, un porte-effecteur (350) reçoit une première tête laser (310) de type TEA CO2, dite d'excitation, pour le décapage/dérochage et l'excitation impulsionnelle de la surface de la pièce (301) objet de l'opération. Le laser CO2 est produit par un générateur (311) et convoyé jusqu'à la tête (320) par des moyens (360) connus de l'art antérieur.

Le porte-effecteur (350) supporte également une seconde tête laser (320), dite de détection, pour la mesure en interférométrie des déformations de la surface. Cette seconde tête laser (320) est de type Nd-YAG ou, selon un mode de réalisation préféré, le laser de détection est un laser à fibre impulsionnel utilisant une longueur d'onde de l'ordre de 1 µm (10⁻⁶ m). La détection est avantageusement réalisée par interférométrie Doppler, mesurant la vitesse de vibration en surface, à l'aide d'un interféromètre confocal de type Fabry-Pérot.

Le porte-effecteur (350) est supporté par un bras (340) robotisé qui permet de réaliser le balayage de la surface à contrôler. Un dispositif informatique (370) permet de piloter le déplacement du bras robotisé et de réaliser le traitement et l'acquisition des mesures. Le pilotage du bras robotisé est réalisé à partir d'un fichier de description numérique de la surface couramment d'une maquette numérique de la pièce (301).

Figure 4, selon un exemple de réalisation, le dispositif objet de l'invention permet de mettre en oeuvre un procédé de décapage/dérochage comprenant une première étape (410) consistant à exciter la surface avec une source laser impulsionnelle, distribuant une énergie spécifique de l'ordre de 2,5 J. cm⁻² de sorte à pulvériser une couche (230) à la surface de la pièce (100, 301), suivie d'une deuxième étape (420) consistant à mesurer la réponse de la pièce à cette sollicitation locale dans le but de détecter des défauts (130) dans l'épaisseur de matière située sous la surface excitée de la pièce. Lors d'une étape suivante (430) le porte-effecteur est déplacé relativement à la surface de la pièce, avant de produire une nouvelle excitation (étape 410) telle que la surface éclairée par le laser d'excitation soit en recouvrement partiel avec la surface précédemment sollicitée.

La description ci-avant illustre clairement que par ses différentes caractéristiques et leurs avantages, la présente invention atteint les objectifs qu'elle visait. En particulier, elle permet de réaliser en temps masqué le contrôle non destructif de la santé matière de l'intégralité d'une pièce de grandes dimensions lors d'une opération de dérochage/décapage de surface. Par l'utilisation de moyens de déplacement (340) pour réaliser un balayage, le dispositif objet de l'invention est très versatile et permet le dérochage/décapage automatique d'une grande variété de pièces. La réunion des deux procédés, de décapage/dérochage et de contrôle non destructif apporte des synergies L'utilisation d'une énergie d'excitation plus élevée permet d'améliorer le procédé de contrôle non destructif en produisant notamment des conditions plus favorables pour le contrôle de pièces épaisses. La possibilité de combinaison de l'opération de décapage/dérochage avec le contrôle non destructif de la pièce, rendu une telle opération, par balayage de la surface, économiquement rentable.

## Revendications

1. Procédé de décapage à sec de la surface d'une pièce (100, 301) constituée d'un matériau composite à renfort fibreux comprenant les étapes consistant à :
a. exciter (410) la surface (201) de la pièce par une impulsion d'énergie thermoélastique au moyen d'un seul tir laser de sorte à produire simultanément une perturbation (112, 212) apte à décoller les particules (231) adhérentes à ladite surface et une onde acoustique (113, 213) apte à se propager dans la pièce, l'énergie d'impulsion laser est de 6 joules pour une durée d'impulsion de 100ns ;
b. mesurer (420) la réponse acoustique de la pièce à l'excitation produite à l'étape a) de sorte à détecter des discontinuités (130) aptes à influencer la propagation de l'onde (113, 213) dans l'épaisseur de la pièce (100, 301).

2. Procédé selon la revendication 1, **caractérisé en ce que** la mesure de la réponse acoustique est réalisée par interférométrie laser.

3. Procédé selon la revendication 2 **caractérisé en ce que** l'énergie d'impulsion est répartie sur une surface sensiblement rectangulaire de 5x40mm².

## Patentansprüche

1. Verfahren zum Trockenätzen der Oberfläche eines Teils (100, 301), das aus einem faserverstärkten Verbundwerkstoff besteht, die folgenden Schritte umfassend:
a. Erregen (410) der Oberfläche (201) des Teils durch einen Impuls thermoelastischer Energie mittels eines einzigen Laserschusses, um gleichzeitig eine Störung (112, 212), die in der Lage ist, die an der Oberfläche haftenden Teilchen (231) zu lösen, und eine akustische Welle (113, 213), die in der Lage ist, sich in dem Teil auszubreiten, zu erzeugen, wobei die Laserimpulsenergie 6 Joule betragt, bei einer Impulsdauer von 100 ns;
b. Messen (420) der akustischen Antwort des Teils auf die in Schritt a) erzeugte Erregung, um Diskontinuitäten (130) zu erkennen, die in der Lage sind, die Ausbreitung der Welle (113, 213) in der Dicke des Teils (100, 301) zu beeinflussen.

2. Verfahren nach Anspruch 1, **dadurch gekennzeichnet, dass** die Messung der akustischen Antwort durch Laserinterferometrie durchgeführt wird.

3. Verfahren nach Anspruch 2, **dadurch gekennzeichnet, dass** die Impulsenergie auf einer im Wesentlichen rechteckigen Fläche von 5x40 mm² verteilt wird.

## Claims

1. Method for the dry pickling of the surface of a workpiece (100, 301) consisting of a fibre-reinforced composite material comprising the steps consisting in:
a. exciting (410) the surface (201) of the workpiece with a thermoelastic energy pulse by means of a single laser shot so as to simultaneously produce a disruption (112, 212) that is capable of detaching the particles (231) adhering to said surface and an acoustic wave (113, 213) that is capable of propagating through the workpiece, the energy of the laser pulse is 6 joules for a pulse duration of 100 ns;
b. measuring (420) the acoustic response of the workpiece upon the excitation produced in step a) so as to detect discontinuities (130) that are capable of affecting the propagation of the wave (113, 213) through the thickness of the workpiece (100, 301).

2. Method according to Claim 1, **characterized in that** the measurement of the acoustic response is carried out by laser interferometry.

3. Method according to Claim 2, **characterized in that** the pulse energy is distributed over a substantially rectangular area of 5x40 mm².
